# EUROPEAN PATENT APPLICATION

(11) **EP 4 845 218 A1**
(43) Date of publication of application: **25.11.2026**
(21) Application number: 25747854.5
(22) Date of filing: 24.01.2025
(51) Int. Cl.: H04W 36/00

(54) **HANDOVER METHOD AND COMMUNICATION APPARATUS**

(30) Priority: 29.01.2024 CN 202410121987
(71) Applicant: Huawei Technologies Co., Ltd., Shenzhen, Guangdong 518129 (CN)
(72) Inventor: CHEN, Ying, Shenzhen, Guangdong 518129 (CN); XU, Bin, Shenzhen, Guangdong 518129 (CN)
(74) Representative: Huawei European IPR
(86) International application number: PCT/CN2025/074788
(87) International publication number: WO 2025/162286

(57) **Abstract**

This application provides a handover method and a communication apparatus. A source access network device sends first information to a candidate control plane network element. The first information indicates the candidate control plane network element to prepare a resource for a conditional handover of a terminal device. The source access network device sends second information to the terminal device. The second information indicates a handover condition and at least one candidate access network device. The at least one candidate control plane network element serves the at least one candidate access network device, and a source control plane network element that serves the source access network device is different from any candidate control plane network element. This embodiment enables support for both a conditional handover and a control plane network element handover. In addition, the sequence of sending the first information and the second information is not limited in this embodiment. The terminal device and a core network may prepare for the conditional handover concurrently, thereby reducing the delay of the conditional handover.

## Description

### CROSS-REFERENCE TO RELATED APPLICATIONS

This application claims priority to Chinese Patent Application No. 202410121987.6, filed with the China National Intellectual Property Administration on January 29, 2024 and entitled "HANDOVER METHOD AND COMMUNICATION APPARATUS", which is incorporated herein by reference in its entirety.

### TECHNICAL FIELD

This application relates to the field of communication technologies, and in particular, to a handover method and a communication apparatus.

### BACKGROUND

A conditional handover (conditional handover, CHO) refers to a process in which a source base station configures a handover condition and at least one candidate base station for a terminal device. When the handover condition is satisfied, the terminal device selects a target base station from the at least one candidate base station based on measurement results of the at least one candidate base station, and performs a handover from the source base station to the target base station. Compared with conventional handovers (that is, non-conditional handovers), the conditional handover enables the terminal device to select the target base station based on the measurement results and initiate the handover itself. This avoids signaling exchange between the terminal device and the source base station, and also prevents handover failures caused by changes in the radio link status during signaling exchanges between the source base station and the target base station.

In conditional handover scenarios, if the source base station and the target base station are managed by different core network elements, a core network element handover is involved. How to support both the conditional handover and the core network element handover needs to be considered.

### SUMMARY

Embodiments of this application provide a handover method and a communication apparatus to support both a conditional handover and a core network element handover.

According to a first aspect, this application provides a handover method. The method may be performed by a source access network device, or may be performed by another device that includes a function of the source access network device, or may be performed by a chip system (or a chip) or another functional module. The chip system or the functional module can implement the function of the source access network device. The chip system or the functional module is, for example, disposed in the source access network device. An example in which the method is performed by the source access network device is used for description. The source access network device sends first information to at least one candidate control plane network element, and sends second information to a terminal device. The first information indicates to prepare a resource for a conditional handover of the terminal device. The second information indicates a handover condition and at least one candidate access network device. The at least one candidate control plane network element serves the at least one candidate access network device, and a source control plane network element that serves the source access network device is different from any candidate control plane network element.

In this embodiment, the source access network device performs conditional handover configuration for the terminal device, and indicates the candidate control plane network element to prepare a resource for the conditional handover of the terminal device, to support both the conditional handover and a control plane network element handover. In addition, the sequence of sending the first information and the second information is not limited in this embodiment. To be specific, the source access network device may perform the conditional handover configuration for the terminal device when a core network is not ready, or even when the source access network device does not indicate the candidate control plane network element to prepare the resource for the conditional handover of the terminal device. The terminal device and the core network may prepare for the conditional handover concurrently, thereby reducing the delay of the conditional handover.

In a possible implementation, the source access network device may further receive downlink data from the at least one candidate access network device, and send the downlink data to the terminal device.

This implementation is applicable to a scenario in which the resource preparation for the conditional handover of the terminal device on a core network side is completed, and the terminal device has not completed the conditional handover (that is, the terminal device has not been handed over to the target access network device). The downlink data is transmitted from a candidate user plane network element to the at least one candidate access network device. The at least one candidate access network device sends the downlink data to the source access network device, and the source access network device sends the downlink data to the terminal device, which can improve the transmission efficiency of the downlink data.

In a possible implementation, the source access network device may further receive downlink data from a source user plane network element. The source access network device sends the downlink data to the terminal device via a target access network device in the at least one candidate access network device.

This implementation is applicable to a scenario in which the terminal device has not completed the conditional handover (that is, the terminal device has not been handed over to the target access network device). The downlink data is transmitted from the source user plane network element to the source access network device, the source access network device sends the downlink data to the candidate access network device, and after the terminal device is handed over to the target access network device, the target access network device sends the downlink data to the terminal device. This can avoid a data loss in a process in which the terminal device is handed over to an access network device.

In a possible implementation, the source access network device may further send third information to the terminal device. The third information indicates a time window, and the time window is a time window within which the terminal device is handed over from the source access network device to the target access network device based on the handover condition.

In a possible implementation, within a time window, the source access network device sends the downlink data to the at least one candidate access network device, and sends the downlink data to the terminal device via the target access network device in the at least one candidate access network device. The time window is a time window within which the terminal device is handed over from the source access network device to the target access network device based on the handover condition.

In this implementation, a time window is preset for the terminal device to perform the conditional handover. Theoretically, the terminal device has not been handed over to the target access network device before the time window, and the terminal device has been handed over to the target access network device after the time window. The downlink data is transmitted from the source user plane network element to the source access network device, and the source access network device sends the downlink data to the candidate access network device within the time window. Before the time window, the source access network device may directly send the downlink data to the terminal device instead of sending the downlink data to the candidate access network device. With the time window, buffering pressure of the candidate access network device can be reduced.

In a possible implementation, the source access network device may further receive fourth information. The fourth information indicates that resource preparation for the conditional handover of the terminal device is completed. The source access network device sends fifth information to the terminal device. The fifth information indicates that a handover to an access network device is allowed.

In this implementation, after completing the resource preparation, the core network side notifies the terminal device via the source access network device, and the terminal device performs a handover to the access network device only after receiving a notification. This can avoid a case in which the resource is not ready on the core network side, the terminal device sends uplink data to the target access network device after the terminal device is handed over to the target access network device, and the target access network device sends the uplink data to a target user plane network element. In this case, the target user plane network element cannot receive the uplink data, that is, the uplink data is lost. In addition, if the target user plane network element does not receive the uplink data, the target user plane network element may consider that the terminal device has not been handed over to the target access network device, and a transmission path of the downlink data is also affected.

In a possible implementation, the source access network device determines the at least one candidate access network device based on an ephemeris.

According to a second aspect, this application provides a handover method. The method may be performed by a terminal device, or may be performed by another device that includes a function of the terminal device, or may be performed by a chip system (or a chip) or another functional module. The chip system or the functional module can implement the function of the terminal device. The chip system or the functional module is, for example, disposed in the terminal device. An example in which the method is performed by the terminal device is used for description. The terminal device receives second information from a source access network device. The second information indicates a handover condition and at least one candidate access network device, and a control plane network element that serves the source access network device is different from a control plane network element that serves the at least one candidate access network device. After determining that the handover condition is satisfied, the terminal device switches from accessing the source access network device to accessing a target access network device, where the target access network device belongs to the at least one candidate access network device.

In a possible implementation, the terminal device may further receive third information from the source access network device. The third information indicates a time window. Within the time window, the terminal device switches from accessing the source access network device to accessing the target access network device.

In a possible implementation, the terminal device may further receive fifth information from the source access network device. The fifth information indicates that a handover to an access network device is allowed. Further, the terminal device switches from accessing the source access network device to accessing the target access network device.

According to a third aspect, this application provides a handover method. The method may be performed by a target access network device, or may be performed by another device that includes a function of the target access network device, or may be performed by a chip system (or a chip) or another functional module. The chip system or the functional module can implement the function of the target access network device. The chip system or the functional module is, for example, disposed in the target access network device. An example in which the method is performed by the target access network device is used for description. During a conditional handover of a terminal device, the target access network device receives downlink data from a source access network device and stores the downlink data, and sends the downlink data to the terminal device after determining that the terminal device is handed over to the target access network device (that is, uplink data of the terminal device is received). A target control plane network element that serves the target access network device is different from a source control plane network element that serves the source access network device.

In a possible implementation, the target access network device receives the uplink data from the terminal device and stores the uplink data. The target access network device receives indication information from the target control plane network element. The indication information indicates that resource preparation for a conditional handover of the terminal device on a core network side is completed. The target access network device sends the stored uplink data to a target core network device.

In this implementation, after the terminal device completes the conditional handover (that is, the terminal device is handed over to the target access network device), the uplink data arrives at the target access network device. A target access network first buffers the uplink data, and after the core network side is ready, sends the uplink data to the core network side. This can avoid a data loss caused when the target access network device sends the uplink data to the core network side before the core network side is ready.

According to a fourth aspect, a communication apparatus is provided. The communication apparatus may be the source access network device according to the first aspect. The communication apparatus has a function of the source access network device. The communication apparatus is, for example, a functional module in the source access network device, for example, a baseband apparatus or a chip system. Alternatively, the communication apparatus may be the terminal device according to the second aspect. The communication apparatus has a function of the terminal device. The communication apparatus is, for example, a functional module in the terminal device, for example, a baseband apparatus or a chip system. Alternatively, the communication apparatus may be the target access network device according to the third aspect. The communication apparatus has a function of the target access network device. The communication apparatus is, for example, a functional module in the target access network device, for example, a baseband apparatus or a chip system.

In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. When implementing the sending function, the transceiver unit may be referred to as a sending unit (also referred to as a sending module sometimes). When implementing the receiving function, the transceiver unit may be referred to as a receiving unit (also referred to as a receiving module sometimes). The sending unit and the receiving unit may be a same functional module, the functional module is referred to as the transceiver unit, and the functional module can implement the sending function and the receiving function. Alternatively, the sending unit and the receiving unit may be different functional modules, and the transceiver unit is a general term for these functional modules.

In a possible implementation, the communication apparatus further includes a storage unit (referred to as a storage module sometimes). The processing unit is configured to: be coupled to the storage unit, and execute a program or instructions in the storage unit, to enable the communication apparatus to perform the function of the source access network device according to the first aspect, or perform the function of the terminal device according to the second aspect, or perform the function of the target access network device according to the third aspect.

When the communication apparatus is the source access network device according to the first aspect, at least one of the following possible implementations is included.

In a possible implementation, the transceiver unit is configured to: send first information to at least one candidate control plane network element, and send second information to a terminal device. The first information indicates to prepare a resource for a conditional handover of the terminal device. The second information indicates a handover condition and at least one candidate access network device. The at least one candidate control plane network element serves the at least one candidate access network device, and a source control plane network element that serves the communication apparatus is different from the at least one candidate control plane network element.

In a possible implementation, the transceiver unit is further configured to: receive downlink data from the at least one candidate access network device, and send the downlink data to the terminal device.

In a possible implementation, the transceiver unit is further configured to: receive downlink data from a source user plane network element, and send the downlink data to the terminal device via a target access network device in the at least one candidate access network device.

In a possible implementation, the transceiver unit is further configured to send third information to the terminal device. The third information indicates a time window, and the time window is a time window within which the terminal device is handed over from the communication apparatus to the target access network device based on the handover condition.

In a possible implementation, when the transceiver unit is configured to send the downlink data to the terminal device via the target access network device in the at least one candidate access network device, the transceiver unit is specifically configured to: within a time window, send the downlink data to the at least one candidate access network device, and send the downlink data to the terminal device via the target access network device in the at least one candidate access network device. The time window is a time window within which the terminal device is handed over from the source access network device to the target access network device based on the handover condition.

In a possible implementation, the transceiver unit is further configured to: receive fourth information, where the fourth information indicates that resource preparation for the conditional handover of the terminal device is completed; and send fifth information to the terminal device, where the fifth information indicates that a handover to an access network device is allowed.

In a possible implementation, the processing unit is configured to determine the at least one candidate access network device based on an ephemeris.

When the communication apparatus is the terminal device according to the second aspect, at least one of the following possible implementations is included.

In a possible implementation, the transceiver unit is configured to receive second information from a source access network device. The second information indicates a handover condition and at least one candidate access network device, and a control plane network element that serves the source access network device is different from a control plane network element that serves the at least one candidate access network device. The processing unit is configured to: after determining that the handover condition is satisfied, switch from accessing the source access network device to accessing a target access network device, where the target access network device belongs to the at least one candidate access network device.

In a possible implementation, the transceiver unit is further configured to receive third information from the source access network device. The third information indicates a time window. The processing unit is specifically configured to: within the time window, switch from accessing the source access network device to accessing the target access network device.

In a possible implementation, the transceiver unit is further configured to receive fifth information from the source access network device. The fifth information indicates that a handover to an access network device is allowed.

According to a fifth aspect, a communication apparatus is provided, including an interface circuit and a processor, and optionally, further including a memory. The memory is configured to store a computer program. The processor is coupled to the memory and the interface circuit. When the processor reads the computer program or instructions, the communication apparatus performs the method performed by the source access network device according to the first aspect, or performs the method performed by the terminal device according to the second aspect, or performs the method performed by the target access network device according to the third aspect. For example, the interface circuit is configured to: receive a signal from a communication apparatus other than the communication apparatus and transmit the signal to the processor, or send a signal from the processor to a communication apparatus other than the communication apparatus. By using a logic circuit or executing code instructions, the processor is configured to implement the method performed by the source access network device according to the first aspect, or is configured to implement the method performed by the terminal device according to the second aspect, or is configured to implement the method performed by the target access network device according to the third aspect.

According to a sixth aspect, a communication apparatus is provided, including a processor, and optionally, further including a memory. The processor is coupled to the memory, and the memory is configured to store a computer program or instructions. The processor is configured to execute a part or all of the computer program or the instructions in the memory, and when the part or all of the computer program or the instructions are executed, configured to implement the functions of the source access network device according to the first aspect, or is configured to implement the functions of the terminal device according to the second aspect, or is configured to implement the functions of the target access network device according to the third aspect.

In a possible implementation, the apparatus may further include a transceiver. The transceiver is configured to: send a signal processed by the processor, or receive a signal input to the processor. The transceiver may perform a sending action or a receiving action performed by the source access network device according to the first aspect, or performed by the terminal device according to the second aspect, or performed by the target access network device according to the third aspect.

In a possible implementation, the processing units according to the fourth aspect, the fifth aspect, and the sixth aspect may be implemented by using the processor, the storage units according to the fourth aspect, the fifth aspect, and the sixth aspect may be implemented by using the memory, and the transceiver units according to the fourth aspect, the fifth aspect, and the sixth aspect may be implemented via the transceiver.

According to a seventh aspect, a communication system is provided, including at least two of a source access network device, a terminal device, and a target access network device. The source access network device is configured to perform the method performed by the source access network device according to the first aspect, the terminal device is configured to perform the method performed by the terminal device according to the second aspect, and the target access network device is configured to perform the method performed by the target access network device according to the third aspect. For example, the source access network device, the terminal device, and the target access network device may be implemented by using the communication apparatus according to the fourth aspect.

According to an eighth aspect, a computer-readable storage medium is provided. The computer-readable storage medium is configured to store a computer program or instructions. When the computer program or the instructions are run, the method according to the first aspect, the second aspect, or the third aspect is implemented.

According to a ninth aspect, a computer program product including instructions is provided. When the computer program product runs on a computer, the method according to the first aspect, the second aspect, or the third aspect is implemented.

### BRIEF DESCRIPTION OF DRAWINGS

FIG. 1a is a diagram of an architecture of a 5G communication system according to this application;
FIG. 1b is a diagram of another architecture of a 5G communication system according to this application;
FIG. 1c is a diagram of an architecture of a satellite network communication system according to this application;
FIG. 2 is a schematic flowchart of a method of a conditional handover according to this application;
FIG. 3 is a schematic flowchart of a communication method according to this application;
FIG. 4 is a schematic flowchart of a communication method according to this application;
FIG. 5 is a diagram of a structure of a communication apparatus according to this application; and
FIG. 6 is a diagram of a structure of a communication apparatus according to this application.

### DESCRIPTION OF EMBODIMENTS

Technical solutions of this application may be applied to a terrestrial network (terrestrial network, TN), or may be applied to a non-terrestrial network (non-terrestrial network, NTN), for example, a satellite network. The technical solutions of this application may be applied to various wireless communication systems, and may be applied to, but is not limited to, a 4th generation (4th generation, 4G) mobile communication technology system (also referred to as a long term evolution (long term evolution, LTE) system) and a 5th generation (5th generation, 5G) mobile communication technology system (also referred to as a new radio (new radio, NR) system), or may be applied to a future mobile communication system. This is not specifically limited.

In addition, the technical solutions of this application may be applied to a device-to-device (device-to-device, D2D) scenario, for example, an NR-D2D scenario, or may be applied to a V2X scenario, for example, an NR-V2X scenario. The technical solutions of this application may be further applied to fields such as intelligent driving, assisted driving, intelligent connected vehicles, or factory manufacturing scenarios.

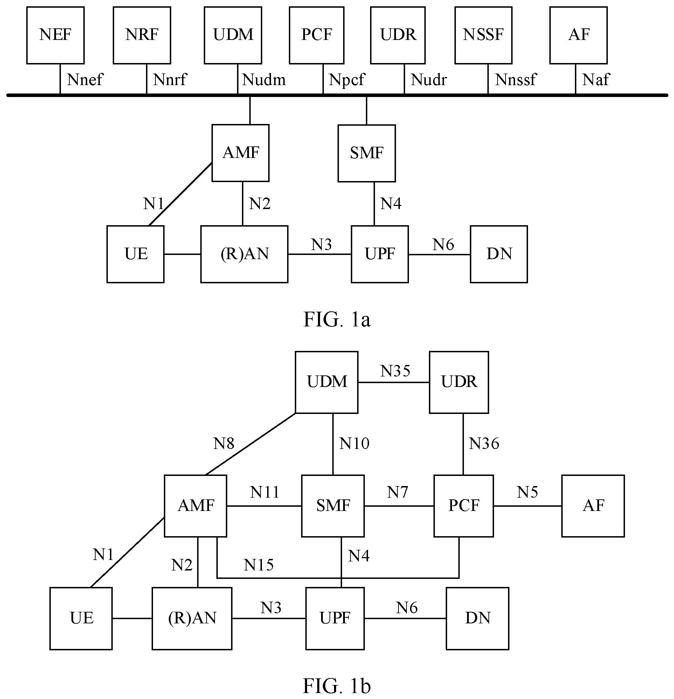

For example, FIG. 1a is a diagram of an architecture of a 5G communication system to which this application is applicable. Specifically, FIG. 1a is a diagram of a service-based 5G network architecture.

For example, FIG. 1b is a diagram of another architecture of a 5G communication system to which this application is applicable. Specifically, FIG. 1b is a diagram of a point-to-point-based 5G architecture. A main difference between FIG. 1a and FIG. 1b lies in that interfaces between network elements in FIG. 1a are service-based interfaces, and interfaces between network elements in FIG. 1b are point-to-point interfaces.

The 5G network architectures shown in FIG. 1a and FIG. 1b may include a terminal device part, an access network part, and a core network part. Optionally, a data network (data network, DN) part and an application function (application function, AF) network element part are further included. A terminal accesses a core network through an access network, and the core network communicates with the DN or the AF. The following briefly describes functions of some network elements in the architecture.

A terminal device (terminal device), which may also be referred to as user equipment (user equipment, UE), is a device that has a wireless transceiver function. The terminal device may be deployed on land, where the deployment includes indoor or outdoor, or handheld or vehicle-mounted deployment; may be deployed on water (for example, on a ship); or may be deployed in air (for example, on an airplane, a balloon, and a satellite). The terminal device may be a mobile phone (mobile phone), a pad (pad), a computer that has a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like.

A (R)AN device in this application is a device that provides a wireless communication function for the terminal device, and the (R)AN device is also referred to as an access network device. The RAN device in this application includes but is not limited to a next-generation base station (gNodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmission point (transmitting and receiving point, TRP), a transmitting point (transmitting point, TP), a mobile switching center, and the like. In systems using different radio access technologies, a device having a function of a base station may be named differently. For example, the device is referred to as a RAN or a gNB (5G NodeB) in a 5th generation (5th generation, 5G) system, is referred to as an evolved NodeB (evolved NodeB, eNB or eNodeB) in an LTE system, and is referred to as a NodeB (NodeB) in a 3rd generation (3rd generation, 3G) system.

A plurality of services may be deployed on the data network DN, which may provide services such as a data service and/or a voice service for the terminal device. For example, the DN is a private network of a smart factory, a sensor installed in a workshop of the smart factory may be the terminal device, the sensor and a control server are deployed in the DN, and the control server may serve the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, data resources, and the like in the internal office network of the company.

An application network element mainly supports interaction with a 3rd generation partnership project (3rd generation partnership project, 3GPP) core network to provide services, for example, affect a data routing decision, a policy control function, or provide some third-party services for a network side. In the 5G communication system, the application network element may be an application function (application function, AF) network element. In a future communication system, the application network element may still be the AF network element, or may have another name. This is not limited in this application.

The core network part may include one or more of the following network elements.

An access management network element (which may also be referred to as a mobility management network element) is a control plane network element provided by a carrier network, and is responsible for access control and mobility management for accessing the carrier network by the terminal device, for example, including functions such as mobility status management, temporary mobile subscriber identity allocation, and user authentication. In the 5G communication system, the access management network element may be an access and mobility management function (access and mobility management function, AMF) network element. In the future communication system, the access management network element may still be the AMF network element, or may have another name. This is not limited in this application.

A session management network element is mainly responsible for session management in a mobile network, for example, session establishment, modification, and release. Specific functions are, for example, allocating an IP address to a user, and selecting a user plane network element that provides a packet forwarding function. In the 5G communication system, the session management network element may be a session management function (session management function, SMF) network element. In the future communication system, a session management network element may still be the SMF network element, or may have another name. This is not limited in this application.

A user plane network element is responsible for forwarding and reception of user data in the terminal device. The user plane network element may receive the user data from the data network, and transmit the user data to the terminal device through the access network device. The user plane network element may alternatively receive the user data from the terminal device through the access network device, and forward the user data to the data network. A transmission resource and a scheduling function, providing a service for the terminal device, in the user plane network element are managed and controlled by the SMF network element. In the 5G communication system, the user plane network element may be a user plane function (user plane function, UPF) network element. In the future communication system, the user plane network element may still be the UPF network element, or may have another name. This is not limited in this application.

A data management network element is configured to: generate an authentication credential, process a subscriber identifier (for example, store and manage a subscription permanent identifier), control access, manage subscription data, and so on. In the 5G communication system, the data management network element may be a unified data management (unified data management, UDM) network element. In the future communication system, unified data management may still be the UDM network element, or may have another name. This is not limited in this application.

A policy control network element can mainly provide a unified policy framework to control network behavior and provide a policy rule to a control layer network function, and is responsible for obtaining user subscription information related to policy decision-making. In the 4G communication system, the policy control network element may be a policy and charging rules function (policy and charging rules function, PCRF) network element. In the 5G communication system, the policy control network element may be a policy control function (policy control function, PCF) network element. In the future communication system, the policy control network element may still be the PCF network element, or may have another name. This is not limited in this application.

A data repository network element is responsible for storing structured data information, including subscription information, policy information, and network data or service data defined in a standard format. In the 5G communication system, the data repository network element may be a unified data repository (unified data repository, UDR). In the future communication system, a network exposure function network element may still be the UDR network element, or may have another name. This is not limited in this application.

A network repository network element may be configured to provide a network element discovery function and provide, based on a request from another network element, network element information corresponding to a network element type. The NRF further provides network element management services, for example, network element registration, update, and deregistration, and network element status subscription and push. In the 5G communication system, the network repository network element may be a network registration function (network repository function, NRF) network element. In the future communication system, the network repository network element may still be the NRF network element, or may have another name. This is not limited in this application.

A network exposure function network element may be configured to securely expose, to the outside, a service, a capability, and the like that are provided by a 3GPP network function device. In the 5G communication system, the network exposure function network element may be a network exposure function (network exposure function, NEF) network element. In the future communication system, the network exposure function network element may still be the NEF network element, or may have another name. This is not limited in this application.

A network slice selection network element may be configured to select an appropriate network slice for a service of a terminal. In the 5G communication system, the network slice selection network element may be a network slice selection function (network slice selection function, NSSF) network element. In the future communication system, the network exposure function network element may still be the NSSF network element, or may have another name. This is not limited in this application.

A network data analytics network element may collect data from each network function (network function, NF), for example, the policy control network element, the session management network element, the user plane network element, the access management network element, and the application function network element (by using a network capability exposure function network element), and perform analysis and prediction. In the 5G communication system, the network data analytics network element may be a network data analytics function (network data analytics function, NWDAF). In the future communication system, the network exposure function network element may still be the NWDAF network element, or may have another name. This is not limited in this application.

It may be understood that the network elements or functions may be network elements in a hardware device, or may be software functions running on dedicated hardware, or virtualized functions instantiated on a platform (for example, a cloud platform). In a possible implementation, the network elements or functions may be implemented by one device, or may be jointly implemented by a plurality of devices, or may be one functional module in one device. This is not specifically limited in embodiments of this application.

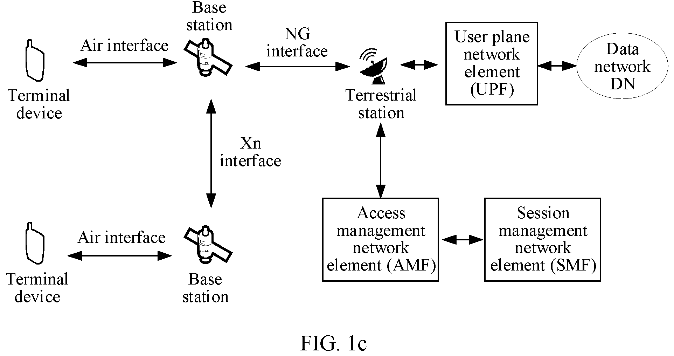

FIG. 1c is a diagram of an architecture of a possible satellite network communication system. A terminal device located on the ground accesses a base station through an air interface, the base station is deployed on a satellite, the base station is connected to a core network deployed on the ground through a terrestrial station, and the core network communicates with a DN. The terrestrial station is responsible for forwarding signaling and service data between the base station on the satellite and the core network. The base station communicates with the terrestrial station through an NG interface. Base stations communicate with each other through an Xn interface. For example, there is a radio link between satellites, to complete signaling exchange and user data transmission between the base stations. The core network includes at least one or more of the following network elements: an access management network element (for example, an AMF), a session management network element (for example, an SMF), and a user plane network element (for example, a UPF). For functions of these network elements, refer to the foregoing descriptions. Details are not described again.

A conditional handover (conditional handover, CHO) refers to a process in which a source base station configures a candidate base station and a handover condition for a terminal device. When the handover condition is satisfied, the terminal device selects a target base station from the candidate base station based on measurement results of the candidate base station, and performs a handover from the source base station to the target base station.

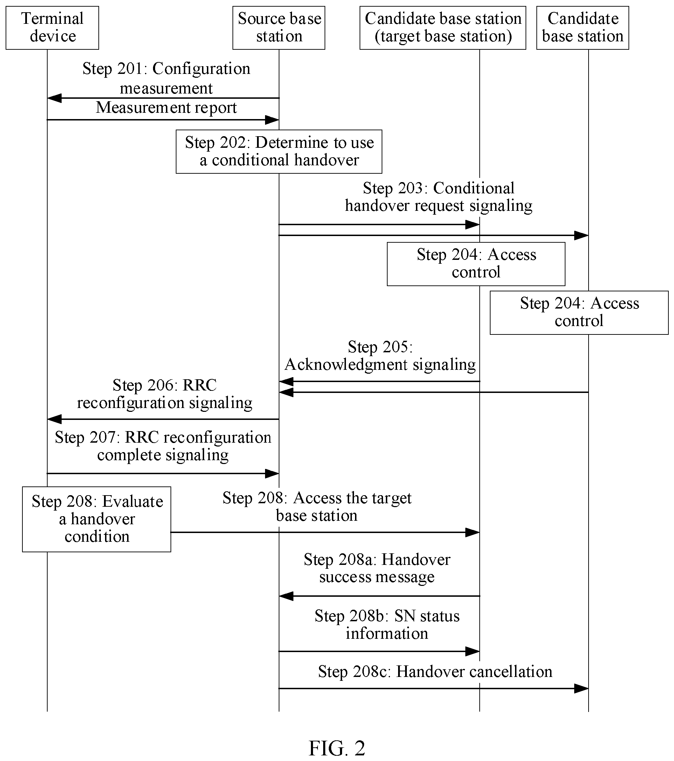

As shown in FIG. 2, a schematic flowchart of a method of the conditional handover is provided, and includes the following steps.

Step 201: The source base station performs configuration measurement on the terminal device, and the terminal device measures a surrounding cell and reports a measurement report to the source base station.

Step 202: The source base station determines, based on the measurement report, to use the conditional handover.

Step 203: The source base station sends, based on the measurement report, conditional handover request signaling to the candidate base station (that is, a neighboring-cell base station) that meets the conditional handover.

Step 204: The candidate base station performs access control, and reserves a resource for the terminal device.

Step 205: The candidate base station feeds back acknowledgment signaling to the source base station, to indicate that the candidate base station agrees to the conditional handover.

Step 206: The source base station sends handover configuration information to the terminal device through RRC reconfiguration signaling, where the handover configuration information includes the handover condition and a configuration parameter of the candidate base station.

Step 207: The terminal device sends RRC reconfiguration complete signaling to the source base station.

Step 208: The terminal device evaluates the handover condition. After the handover condition is satisfied, the terminal device measures the candidate base station, selects the target base station from the candidate base station, detaches from the source base station, and accesses the target base station.

Step 208a: The target base station sends a handover success message to the source base station, to notify the source base station that the terminal device has successfully accessed the target base station.

Step 208b: The source base station sends sequence number (serial number, SN) status information to the target base station, and subsequently, forwards downlink user data to the target base station side.

Step 208c: The source base station sends a handover cancellation message to another candidate base station other than the target base station, to notify the another candidate base station to release the resource reserved for the terminal device.

Compared with conventional handovers (that is, non-conditional handovers), the conditional handover enables the terminal device to select the target base station based on the measurement results and initiate the handover itself. This avoids signaling exchange between the terminal device and the source base station, and also prevents handover failures caused by changes in the radio link status during signaling exchanges between the source base station and the target base station.

In the conditional handover procedure shown in FIG. 2, the source base station and the target base station are managed by a same AMF, and there is no AMF handover. If the source base station and the target base station are managed by different AMFs, a handover from a source AMF to a target AMF is needed. The source AMF serves the source base station, and the target AMF serves the target base station.

In conventional handover (the non-conditional handover) scenarios, if the AMF handover occurs, the following procedure is included.

The source base station sends a handover request to the source AMF. After receiving the handover request, the source AMF selects the target AMF. The target AMF determines a target base station for the terminal device, and the target AMF and core network elements such as a UPF and an SMF prepare resources for a handover of the terminal device, for example, establish a user plane tunnel for the terminal device, and create a context of the terminal device. After the preparation on a core network side is completed, the target AMF notifies the source AMF, and notifies the source AMF of related information of the target base station.

The source AMF sends a handover command to the source base station, the source base station sends the handover command to the terminal device, and the source AMF notifies the terminal device of the related information of the target base station via the source base station. After receiving the handover command, the terminal device is handed over from the source base station to the target base station based on the related information of the target base station.

In a current solution, the AMF handover does not occur in a conditional handover scenario, and the conditional handover does not occur in an AMF handover scenario. This application provides a communication manner that supports both a conditional handover and a core network element handover.

The following describes some terms or concepts in embodiments of this application, to facilitate understanding of a person skilled in the art.

A source access network device is an access network device currently accessed by a terminal device. A candidate access network device (the candidate access network device may also be referred to as a candidate target access network device) is an access network device that a terminal device may access after the terminal device performs a handover between access network devices. There are one or more candidate access network devices. A target access network device is an access network device that a terminal device accesses after the terminal device performs a handover between access network devices. The target access network device is an access network device in the candidate access network devices.

A core network element that serves the source access network device is referred to as a source core network element. The source core network element includes a source control plane network element and a source user plane network element. For example, the source control plane network element includes a source AMF network element, and the source user plane network element includes a source UPF network element. A core network element that serves the candidate access network device is referred to as a candidate core network element (or referred to as a candidate target core network element). The candidate core network element includes a candidate control plane network element and a candidate user plane network element. For example, the candidate control plane network element includes a candidate AMF network element, and the candidate user plane network element includes a candidate UPF network element. A core network element that serves the target access network device is referred to as a target core network element. The target core network element includes a target control plane network element and a target user plane network element. For example, the target control plane network element includes a target AMF network element, and the target user plane network element includes a target UPF network element.

In addition, the source control plane network element in this application is different from any candidate control plane network element. That is, the source access network device and any candidate access network device are served by different control plane network elements. If there are a plurality of candidate access network devices, the plurality of candidate access network devices may be served by a same control plane network element, or may be served by different control plane network elements. An example in which three candidate access network devices are respectively an access network device 1, an access network device 2, and an access network device 3 is used for description. For example, the three access network devices may all be served by a control plane network element 1. For another example, the access network device 1 and the access network device 2 are served by a control plane network element 1, and the access network device 3 is served by a control plane network element 2. For another example, the access network device 1 is served by a control plane network element 1, the access network device 2 is served by a control plane network element 2, and the access network device 3 is served by a control plane network element 3.

Similarly, the source user plane network element in this application is different from any candidate user plane network element. That is, the source access network device and any candidate access network device are served by different user plane network elements. If there are a plurality of candidate access network devices, the plurality of candidate access network devices may be served by a same user plane network element, or may be served by different user plane network elements.

In this application, that the control plane network element/user plane network element serves the access network device means that a communication connection is established between the control plane network element/user plane network element and the access network device, for transmission of control signaling or data.

The control plane network element and the user plane network element may be network elements in a hardware device, or may be software functions run on dedicated hardware, or virtualized functions instantiated on a platform (for example, a cloud platform). In a possible implementation, the control plane network element and the user plane network element may be implemented by one device, or may be jointly implemented by a plurality of devices, or may be one functional module in one device. This is not specifically limited in embodiments of this application.

To better describe embodiments of this application, the following describes, with reference to the accompanying drawings, the method provided in embodiments of this application. Unless otherwise specified below, in the accompanying drawings corresponding to embodiments of this application, steps indicated by dashed lines are all optional steps.

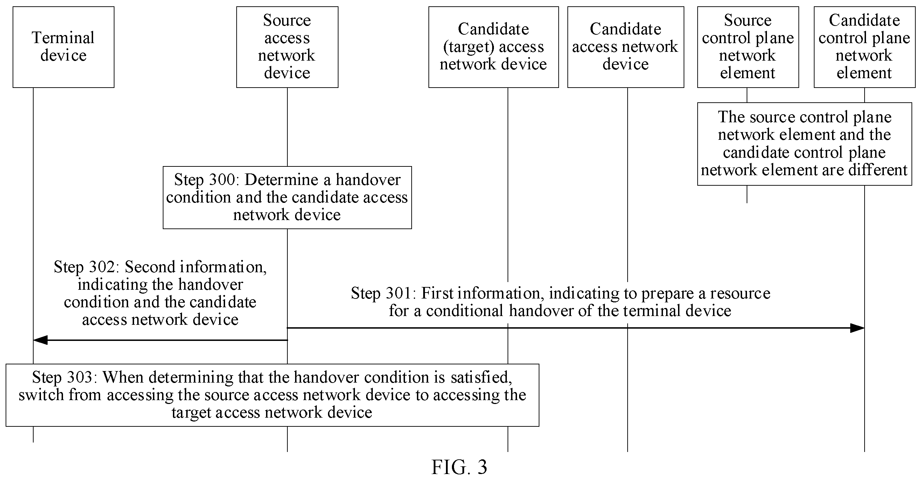

FIG. 3 is a schematic flowchart of communication according to an embodiment of this application. The following steps are included.

It should be noted that in an example in FIG. 3, there are two candidate access network devices, and there is at least one candidate access network device during actual application. In the example in FIG. 3, the two candidate access network devices are served by a same candidate control plane network element, and the two candidate access network devices may be served by different candidate control plane network elements during actual application.

Step 300: A source access network device determines a handover condition and a candidate access network device.

In an example, the source access network device performs a configuration measurement on a terminal device, and the terminal device measures a surrounding cell and reports a measurement report to the source access network device. The source access network device determines, based on the measurement report, that the terminal device can use a conditional handover, and determines one or more candidate access network devices.

In another example, the source access network device determines one or more candidate access network devices based on an ephemeris.

Step 301: The source access network device sends first information to a candidate control plane network element, and correspondingly, the candidate control plane network element receives the first information, where the first information indicates to prepare a resource for the conditional handover of the terminal device.

In an example, the source access network device sends the first information to the candidate access network device, and the candidate access network device sends the first information to the candidate control plane network element. The first information may be carried in conditional handover request signaling.

In another example, the source access network device sends the first information to a source control plane network element, and the first information includes the candidate access network device determined in step 300. The source control plane network element determines a candidate control plane network element corresponding to each candidate access network device, and the source control plane network element sends the first information to the candidate control plane network element.

Resource preparation for the conditional handover of the terminal device is controlled and implemented by the candidate control plane network element. The resource preparation for the conditional handover of the terminal device includes but is not limited to one or more of the following: establishing a path between a target user plane network element and a protocol data unit session anchor (PDU session anchor, PSA) user plane network element, establishing a forwarding path between the target user plane network element and a target access network device, and updating a context of the terminal device.

Step 302: The source access network device sends second information to the terminal device, and correspondingly, the terminal device receives the second information, where the second information indicates the handover condition and the candidate access network device that are determined in step 300.

A sequence of step 301 and step 302 is not limited.

In this embodiment, the source access network device performs conditional handover configuration for the terminal device, and indicates the candidate control plane network element to prepare a resource for the conditional handover of the terminal device, to support both the conditional handover and a control plane network element handover. In addition, a sequence of sending the first information and the second information is not limited in this embodiment. The terminal device and a core network may prepare for the conditional handover concurrently, thereby reducing the delay of the conditional handover.

Step 303: After determining that the handover condition is satisfied, the terminal device switches from accessing the source access network device to accessing a target access network device, where the target access network device belongs to the candidate access network device determined in step 300.

Handover conditions corresponding to different candidate access network devices may be different or may be the same. The handover condition includes but is not limited to one or more of the following: Signal quality is greater than a specified threshold, preset time is reached, and the terminal device is located at a specified region location.

A specific example in which the terminal device switches from accessing the source access network device to accessing the target access network device in step 303 is as follows: The terminal device sends uplink data to the target access network device; and after receiving the uplink data from the terminal device, the target access network device may determine that the terminal device completes the conditional handover, detaches from the source access network device, and accesses the target access network device.

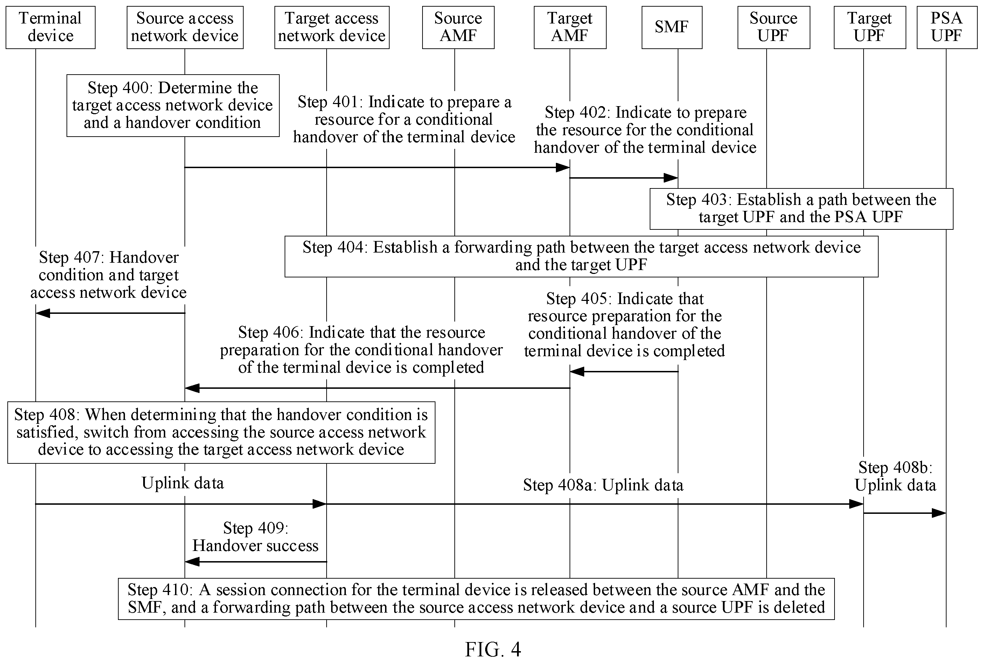

The following describes another specific example with reference to FIG. 3. As shown in FIG. 4, in this example, a specific process in which a core network side prepares a resource for a conditional handover of a terminal device is described.

It should be noted that FIG. 4 does not show another candidate access network device other than the target access network device. During actual application, there are one or more candidate access network devices. Related network elements on the core network side include but are not limited to a candidate user plane network element, a target user plane network element, a candidate control plane network element, a target control plane network element, and a PSA user plane network element. In FIG. 4, another candidate control plane network element other than the target control plane network element is not shown, and another candidate user plane network element other than the target user plane network element is not shown. During actual application, there are one or more candidate control plane network elements, and there are one or more candidate user plane network elements. In addition, in FIG. 4, an example in which the target control plane network element includes a target AMF and an SMF, and the target user plane network element includes a target UPF is used for description.

Step 400: A source access network device determines the target access network device and a handover condition.

For a process of step 400, refer to the descriptions in step 300. Details are not described herein again.

After step 400, step 401 is performed: The source access network device sends first information to the target AMF that serves the target access network device, where the first information indicates to prepare a resource for the conditional handover of the terminal device.

For a process of step 401, refer to the descriptions in step 301.

In an example, the source access network device sends the first information to the target access network device, and the target access network device sends the first information to the target AMF.

In another example, the source access network device sends the first information to a source AMF, where the first information includes the target access network device. The source AMF determines the target AMF that serves the target access network device, and the source AMF sends the first information to the target AMF.

Step 402: The target AMF sends indication information to the SMF that is connected to the target AMF, to indicate to prepare the resource for the conditional handover of the terminal device.

Step 403: After receiving the indication information in step 402, the SMF establishes a path between the target UPF and a PSA UPF.

Step 404: After receiving the indication information in step 402, the SMF establishes a forwarding path between the target UPF and the target access network device.

A sequence of step 403 and step 404 is not limited.

After step 403 and step 404, step 405 is performed: The SMF sends indication information to the target AMF, to indicate that resource preparation for the conditional handover of the terminal device is completed.

Step 406: The target AMF sends the indication information to the source access network device, to indicate that the resource preparation for the conditional handover of the terminal device is completed.

In an example, the target AMF sends the indication information to the target access network device, to indicate that the resource preparation for the conditional handover of the terminal device is completed; and the target access network device sends the indication information to the source access network device, to indicate that the resource preparation for the conditional handover of the terminal device is completed.

In another example, the target AMF sends the indication information to the source AMF, to indicate that the resource preparation for the conditional handover of the terminal device is completed; and the source AMF sends the indication information to the source access network device, to indicate that the resource preparation for the conditional handover of the terminal device is completed.

Step 405 and step 406 are optional steps.

After step 400, step 407 is performed: The source access network device sends, to the terminal device, the handover condition and the target access network device that are determined in step 400.

Step 408: After determining that the handover condition is satisfied, the terminal device sends uplink data to the target access network device; and after receiving the uplink data from the terminal device, the target access network device may determine that the terminal device completes the conditional handover, detaches from the source access network device, and connects to the target access network device.

For processes of step 407 and step 408, refer to the descriptions in step 302 and step 303. Details are not described herein again.

Step 408a: The target access network device sends the uplink data to the target UPF based on the forwarding path established with the target UPF in step 404.

After receiving the uplink data from the target access network device, the target UPF may determine that the terminal device completes the conditional handover, detaches from the source access network device, and accesses the target access network device.

Step 408b: The target UPF sends the uplink data to the PSA UPF.

After receiving the uplink data from the target UPF, the PSA UPF may determine that the terminal device completes the conditional handover, detaches from the source access network device, and accesses the target access network device.

Step 409: The target access network device sends a handover success message to the source access network device, to notify the source access network device that the terminal device has successfully accessed the target access network device.

Step 410: A session connection for the terminal device is released between the source AMF and the SMF, and a forwarding path between the source access network device and a source UPF is deleted.

Optionally, if there is another candidate access network device other than the target access network device, the source access network device sends a handover cancellation message to the another candidate access network device other than the target access network device, to indicate the another candidate access network device to release the resource reserved for the terminal device. The another candidate access network device may indicate another corresponding candidate control plane network element to release the resource reserved for the terminal device, and the another candidate control plane network element may control the release of the resource reserved for the terminal device.

A sequence in which the terminal device performs the conditional handover and the core network side prepares the resource for the conditional handover of the terminal device is not limited, and there may be several possible cases: Case 1: The terminal device has not been handed over to the target access network device, but the resource preparation for the conditional handover of the terminal device on the core network side is completed. Case 2: The terminal device has not been handed over to the target access network device, and the core network side also does not complete the resource preparation for the conditional handover of the terminal device. Case 3: The terminal device completes the conditional handover, detaches from the source access network device, and is handed over to the target access network device, but the core network side has not completed the resource preparation for the conditional handover of the terminal device. Case 4: The terminal device completes the conditional handover, detaches from the source access network device, and is handed over to the target access network device, and the core network side also completes the resource preparation for the conditional handover of the terminal device.

The following describes transmission paths of the uplink data and downlink data for the four cases.

For Case 1 (the terminal device has not been handed over to the target access network device, and a part or all of candidate control plane network elements complete the resource preparation for the conditional handover of the terminal device), possible transmission paths of downlink data are described.

Path 1.1: Candidate user plane network element → candidate access network device (including the target access network device) → terminal device.

The downlink data may be transmitted to the candidate access network device via the candidate user plane network element. After receiving the downlink data from the candidate user plane network element, the candidate access network device stores the downlink data. After the terminal device is handed over to the target access network device, the target access network device sends the stored downlink data to the terminal device. For example, the target access network device transparently transmits the downlink data to the terminal device. Another candidate access network device that is not selected may delete the downlink data. The candidate access network device stores the downlink data, to avoid a data loss in a process in which the terminal device is handed over to an access network device.

Path 1.2: Candidate user plane network element → candidate access network device (including the target access network device) → source access network device → terminal device.

The downlink data may be transmitted to the candidate access network device via the candidate user plane network element. After receiving the downlink data from the candidate user plane network element, the candidate access network device sends the downlink data to the source access network device. After receiving the downlink data from the candidate access network device, the source access network device sends the downlink data to the terminal device in a timely manner. For example, the source access network device transparently transmits the downlink data to the terminal device. The candidate access network device sends the downlink data to the source access network device, and the source access network device may send the downlink data to the terminal device in a timely manner, which can improve the transmission efficiency of the downlink data.

Path 1.3: Source user plane network element → source access network device → terminal device.

The downlink data may be transmitted to the source access network device via the source user plane network element, and the source access network device directly sends the downlink data to the terminal device, which can improve the transmission efficiency of the downlink data.

Path 1.4: Source user plane network element → source access network device → candidate access network device (including the target access network device) → terminal device.

The downlink data may be transmitted to the source access network device via the source user plane network element. The source access network device forwards the downlink data to the terminal device via the target access network device in at least one candidate access network device. A possible example is described: The source access network device separately sends the downlink data to the at least one candidate access network device, and the at least one candidate access network device stores the downlink data after receiving the downlink data from the source access network device. After the terminal device is handed over to the target access network device in the at least one candidate access network device, the target access network device sends the stored downlink data to the terminal device. For example, the source access network device transparently transmits the downlink data to the terminal device. Another candidate access network device that is not selected may delete the downlink data. The candidate access network device stores the downlink data, to avoid a data loss in a process in which the terminal device is handed over to an access network device.

For Case 1, possible transmission paths of the uplink data are described as follows.

Path 1.5: Terminal device → source access network device → source user plane network element.

The uplink data is directly sent to the source user plane network element via the source access network device, which can improve the transmission efficiency of the uplink data.

Path 1.6: Terminal device → source access network device → candidate access network device (including the target access network device) → target user plane network element.

The terminal device sends the uplink data to the source access network device, and the source access network device sends the uplink data to at least one candidate access network device. For example, the source access network device transparently transmits the uplink data to the at least one candidate access network device. Each candidate access network device stores the uplink data. After the terminal device is handed over to the target access network device in the at least one candidate access network device, the target access network device sends the maintained uplink data to the target user plane network element. Another candidate access network device that is not selected may delete the uplink data.

For Case 2 (the terminal device has not been handed over to the target access network device, and all candidate control plane network elements also do not complete the resource preparation for the conditional handover of the terminal device), possible transmission paths of downlink data are described.

Path 2.1: Source user plane network element → source access network device → terminal device. For details about Path 2.1, refer to the description of Path 1.3. Details are not described again.

Path 2.2: Source user plane network element → source access network device → candidate access network device (including the target access network device) → terminal device. For details about Path 2.2, refer to the description of Path 1.4. Details are not described again.

For Case 2, possible transmission paths of the uplink data are described as follows.

Path 2.3: Terminal device → source access network device → source user plane network element. For details about Path 2.3, refer to the description of Path 1.5. Details are not described again.

Path 2.4: Terminal device → source access network device → candidate access network device (including the target access network device) → target user plane network element. For details about Path 2.4, refer to the description of Path 1.6. Details are not described again.

For Case 3 (the terminal device completes the conditional handover, detaches from the source access network device, and is handed over to the target access network device, but the core network side has not completed the resource preparation for the conditional handover of the terminal device), possible transmission paths of downlink data are described.

Path 3.1: Source user plane network element → source access network device → target access network device → terminal device.

For Case 3, possible transmission paths of the uplink data are described as follows.

Path 3.2: Terminal device → target access network device → target user plane network element.

Path 3.3: Terminal device → target access network device → source access network device → source user plane network element.

For Case 4 (the terminal device completes the conditional handover, detaches from the source access network device, and is handed over to the target access network device, and the core network side also completes the resource preparation for the conditional handover of the terminal device), possible transmission paths of downlink data are described.

Path 4.1: Target user plane network element → target access network device → terminal device.

For Case 4, possible transmission paths of the uplink data are described as follows.

Path 4.2: Terminal device → target access network device → target user plane network element.

As described in step 303 and step 408, after determining that the handover condition is satisfied, the terminal device switches from accessing the source access network device to accessing the target access network device. In a possible implementation, the source access network device may indicate, to the terminal device, a time window for performing the conditional handover. After determining that the handover condition is satisfied, the terminal device performs the conditional handover within the time window. For example, the source access network device sends third information to the terminal device, and correspondingly, the terminal device receives the third information. The third information indicates the time window, and the time window is a time window within which the terminal device is handed over from the source access network device to the candidate access network device based on the handover condition. Correspondingly, step 303 and step 408 are specifically as follows: After determining that the handover condition is satisfied, within the time window, the terminal device switches from accessing the source access network device to accessing the target access network device. If determining, within the time window, that the handover condition is not satisfied, the terminal device may not perform the handover to the access network device.

When indicating the time window, the third information may indicate an absolute time window, for example, 10:00 to 10:01, or an n^{th} subframe/slot to an m^{th} subframe/slot, where m is greater than n, and m and n are positive integers. For example, the third information indicates at least two of the start time of a third time port, the end time of the time window, and a length of the time window.

When indicating the time window, the third information may indicate a relative time window, for example, indicate a first time length and a second time length. The first time length indicates a time length of an interval between a reference time point and a start point of the time window, and the second time length is a time length of the time window. The first time length plus the reference time point yields the start point of the time window, and the second time length plus the start point yields an end point of the time window. The reference time point may be specified in a protocol, and does not need to be indicated by the source access network device. Alternatively, the third information further indicates the reference time point. The reference time point may be determined based on a time point at which the terminal device receives the third information, or may be determined based on a time point at which the terminal device receives the first information, or may be determined based on a time point at which the terminal device determines that the handover condition is satisfied. This is not limited herein.

In a scenario in which the source access network device indicates the time window to the terminal device, theoretically, the terminal device has not been handed over to the target access network device before the time window, and the terminal device has been handed over to the target access network device after the time window. A transmission path of the downlink data is: source access network device → candidate access network device (including the target access network device) → terminal device (refer to Path 1.4 and Path 2.2). In other words, a possible example in which the source access network device sends the downlink data to the terminal device via the target access network device in the at least one candidate access network device is as follows: Within a time window, the source access network device sends the downlink data to the at least one candidate access network device, and sends the downlink data to the terminal device via the target access network device in the candidate access network device. The downlink data is forwarded from the source access network device to the target access network device only within the time window for performing the conditional handover. Before the time window, the source access network device may directly send the downlink data to the terminal device instead of sending the downlink data to the candidate access network device. With the time window, data buffering pressure of the target access network device before the terminal device completes a handover to an access network device can be reduced.

As described above (for example, step 303 and step 408), after determining that the handover condition is satisfied, the terminal device switches from accessing the source access network device to accessing the target access network device. The terminal device may not need to consider whether the core network completes the resource preparation for the conditional handover of the terminal device, and autonomously determines when to perform the handover. In a possible implementation, after determining that at least one candidate control plane network element completes the resource preparation for the conditional handover of the terminal device, the terminal device performs the handover to the access network device. If the candidate control plane network element has not completed the resource preparation for the conditional handover of the terminal device, the terminal device does not perform the handover to the access network device even if determining that the handover condition is satisfied. For example, the source access network device receives fourth information, where the fourth information indicates that the resource preparation for the conditional handover of the terminal device is completed; and the source access network device sends fifth information to the terminal device, and correspondingly, the terminal device receives the fifth information, where the fifth information indicates that a handover to an access network device is allowed. For example, the source access network device sends the fifth information to the terminal device only after determining that all candidate control plane network elements complete the resource preparation for the conditional handover of the terminal device. The terminal device performs the handover to the access network device only after determining that the fifth information is received and the handover condition is satisfied.

An example in which the source access network device receives the fourth information is as follows: The candidate control plane network element sends the fourth information to the source control plane network element, and the source control plane network element sends the fourth information to the source access network device. In this case, the source access network device receives the fourth information from the source control plane network element. Another example in which the source access network device receives the fourth information is as follows: The candidate control plane network element sends the fourth information to the candidate access network device, and the candidate access network device sends the fourth information to the source access network device. In this case, the source access network device receives the fourth information from the candidate access network device.

This example is applied to the example in FIG. 4. For a process in which the access network device receives the fourth information, refer to the descriptions in step 406. After step 406, the source access network device sends fifth information to the terminal device, and correspondingly, the terminal device receives the fifth information, where the fifth information indicates that a handover to an access network device is allowed. In step 408, the terminal device performs the handover to the access network device only after determining that the fifth information is received and the handover condition is satisfied.

The terminal device may evaluate the condition in advance, and select the target access network device from the candidate access network device. However, when to perform the handover to the target access network device needs to be indicated by a network side. In this way, it can be ensured that the terminal device performs the handover to the access network device only after the core network is ready. If the terminal device is handed over to the target access network device before the core network is ready, and sends the uplink data to the target access network device, and the target access network device sends the uplink data to the target user plane network element, the target user plane network element cannot receive the uplink data, that is, the uplink data is lost. In addition, if the target user plane network element does not receive the uplink data, the target user plane network element may consider that the terminal device has not been handed over to the target access network device, and a transmission path of the downlink data is also affected.

After the terminal device is handed over to the target access network device, the uplink data of the terminal device is sent to the target access network device. After receiving the uplink data of the terminal device, the target access network may send the uplink data to the target user plane network element in a timely manner without considering whether the resource preparation for the conditional handover of the terminal device on the core network side is completed. As described above, if the core network is not ready, the target user plane network element cannot receive the uplink data, resulting in a loss of the uplink data. In addition, if the target user plane network element does not receive the uplink data, the target user plane network element may consider that the terminal device has not been handed over to the target access network device, and a transmission path of the downlink data is also affected. In a possible implementation, the target access network device may first buffer the uplink data, and then send the uplink data to the target user plane network element after the core network is ready. For example, in the example in FIG. 4, after step 405, the target AMF may send the indication information to the target access network device, to indicate that the resource preparation for the conditional handover of the terminal device is completed. In step 408a, the target access network device sends the uplink data to the target UPF based on the forwarding path established with the target UPF in step 404 only after determining that the indication information is received. For another example, in Path 3.2, the target access network device sends the uplink data to the target user plane network element only after determining that the indication information is received.

In a possible implementation, after the uplink data of the terminal device arrives at the target user plane network element via the target access network device (that is, a data path is established between the terminal device and the target user plane network element), the target user plane network element may send a downlink data end marker to the source access network device via the target control plane network element. In this way, disorder and a loss of the downlink data forwarded to the target access network and the downlink data directly sent to the target access network device can be prevented.

It may be understood that to implement the functions in the foregoing embodiments, the terminal device and the access network device include corresponding hardware structures and/or software modules for performing the functions. A person skilled in the art should be easily aware that this application can be implemented by hardware or a combination of hardware and computer software in combination with the units and the method steps in the examples described in embodiments disclosed in this application. Whether a function is performed by hardware or hardware driven by computer software depends on particular application scenarios and design constraints of the technical solutions.

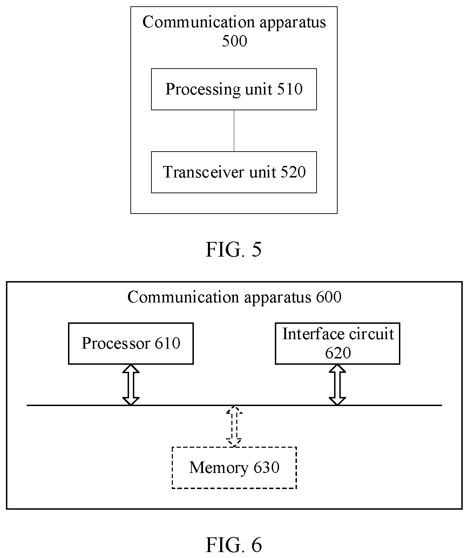

FIG. 5 and FIG. 6 are diagrams of structures of possible communication apparatuses according to embodiments of this application. The communication apparatuses may be configured to implement functions of the terminal device and the network device in the foregoing method embodiments, and therefore can also achieve beneficial effects of the foregoing method embodiments. As shown in FIG. 5, a communication apparatus 500 includes a processing unit 510 and a transceiver unit 520.

For example, the communication apparatus 500 is configured to implement functions of the target access network device, the source access network device, or the terminal device in the method embodiments shown in FIG. 3 and FIG. 4. The transceiver unit 520 may perform a receiving action and a sending action that are performed by the target access network device, the source access network device, or the terminal device in the foregoing method embodiments. The processing unit 510 may perform an action other than the sending action and the receiving action among actions performed by the target access network device, the source access network device, or the terminal device in the foregoing method embodiments.

For example, when the communication apparatus 500 is configured to implement the functions of the source access network device in the method embodiment shown in FIG. 3, the transceiver unit 520 is configured to send first information and send second information. The processing unit 510 is configured to: determine a handover condition and a candidate access network device, generate the first information, and generate the second information.

For example, when the communication apparatus 500 is configured to: implement the functions of the terminal device in the method embodiment shown in FIG. 3, the transceiver unit 520 is configured to receive the second information. The processing unit 510 is configured to: parse the second information, and when determining that the handover condition is satisfied, switch from accessing the source access network device to accessing the target access network device.

For example, when the communication apparatus 500 is configured to implement the functions of the target access network device in the method embodiment shown in FIG. 4, the transceiver unit 520 is configured to: receive uplink data from the terminal device, and send handover success indication information to the source access network device. The processing unit 510 is configured to establish a forwarding path between the target access network device and a target UPF.

For more detailed descriptions of the processing unit 510 and the transceiver unit 520, directly refer to the related descriptions in the method embodiments shown in FIG. 3 to FIG. 4. Details are not described herein again. The processing unit 510 may be implemented by using a processor, and the transceiver unit 520 may be implemented by using a transceiver.

As shown in FIG. 6, a communication apparatus 600 includes a processor 610 and an interface circuit 620. The processor 610 and the interface circuit 620 are coupled to each other. It may be understood that the interface circuit 620 may be a transceiver or an input/output interface. Optionally, the communication apparatus 600 may further include a memory 630, configured to store instructions executed by the processor 610, or store input data required by the processor 610 to run instructions, or store data generated after the processor 610 runs instructions. In some cases, the interface circuit 620 may also be understood as a part of the processor 610. In this case, the communication apparatus 600 includes the processor 610.

When the communication apparatus 600 is configured to implement the methods shown in FIG. 3 and FIG. 4, the processor 610 is configured to implement the functions of the processing unit 510, and the interface circuit 620 is configured to implement the functions of the transceiver unit 520.

When the communication apparatus is a chip used in a terminal device, the chip in the terminal device implements the functions of the terminal device in the foregoing method embodiments. That the chip in the terminal device receives information from a network device may be understood as that the information is first received by another module (for example, a radio frequency module or an antenna) in the terminal device, and then sent by the module to the chip in the terminal device. That the chip in the terminal device sends information to a network device may be understood as that the information is first sent to another module (for example, a radio frequency module or an antenna) in the terminal device, and then sent by the module to the network device.

When the communication apparatus is a chip used in the network device, the chip in the network device implements functions of the network device in the foregoing method embodiments. That the chip in the network device receives information from the terminal device may be understood as that the information is first received by another module (for example, a radio frequency module or an antenna) in the network device, and then sent by the module to the chip in the network device. That the chip in the network device sends information to the terminal device may be understood as that the information is delivered to another module (for example, a radio frequency module or an antenna) in the network device, and then sent by the module to the terminal device. The module in the network device herein may be a baseband chip in the network device, or may be a DU or another module. The DU herein may be a DU in an open radio access network O-RAN architecture.

In this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives, via another entity, the information sent by the entity A. The entities A and B herein may be network devices or terminal devices, or may be modules inside the network devices or modules inside the terminal devices. Information sending and receiving may be information exchange between the network device and the terminal device. Information sending and receiving may alternatively be information exchange between two network devices, for example, information exchange between a CU and a DU. Information sending and receiving may alternatively be information exchange between different modules inside an apparatus, for example, information exchange between the chip in the terminal device and the another module in the terminal device, or information exchange between the chip in the network device and the another module in the network device.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

An embodiment of this application further provides a computer-readable storage medium that stores a computer program. When the computer program is executed by a computer, the computer is enabled to perform the foregoing communication method. In other words, the computer program includes instructions used to implement the communication.

An embodiment of this application further provides a computer program product, including computer program code. When the computer program code is run on a computer, the computer is enabled to perform the communication method.

An embodiment of this application further provides a communication system. The communication system includes at least two of a source access network device, a target access network device, and a terminal device that perform the communication method.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM) (also referred to as a read-only optical disc), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may alternatively exist in a base station or terminal as discrete components.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, a first control plane network element, user equipment, or another programmable apparatus. The computer program or instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, or may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects. For example, A/B indicates A or B. "At least one of the following items (pieces)", "one or more of the items", or a similar expression indicates any combination of these items, including a single item (piece) or any combination of a plurality of items (pieces). For example, at least one of a, b, or c or one or more of a, b, or c, represents a, b, c, a and b, a and c, b and c, or a, b, and c. Each of a, b, or c may be singular or plural.

Ordinal numbers such as "first" and "second" mentioned in embodiments of this application are used to distinguish between a plurality of objects, and are not used to limit sizes, content, an order, a time sequence, priorities, importance, or the like of the plurality of objects. In addition, these names do not indicate that the two pieces of information have different included content, transmit ends/receive ends, sending sequences, sizes, application scenarios, priorities, importance, or the like. In addition, step numbers in embodiments described in this application are merely used to distinguish between different steps, but are not used to limit a sequence of the steps.

## Claims

1. A handover method, applied to a source access network side, comprising:
sending first information to at least one candidate control plane network element, and sending second information to a terminal device, wherein
the first information indicates to prepare a resource for a conditional handover of the terminal device; and
the second information indicates a handover condition and at least one candidate access network device, the at least one candidate control plane network element serves the at least one candidate access network device, and a source control plane network element that serves a source access network device is different from any candidate control plane network element.

2. The method according to claim 1, further comprising:
receiving downlink data from the at least one candidate access network device; and
sending the downlink data to the terminal device.

3. The method according to claim 1, further comprising:
receiving downlink data from the source user plane network element; and
sending the downlink data to the terminal device via a target access network device in the at least one candidate access network device.

4. The method according to claim 3, further comprising:
sending third information to the terminal device, wherein the third information indicates a time window, and the time window is a time window within which the terminal device is handed over from the source access network device to the target access network device based on the handover condition.

5. The method according to claim 3, wherein the sending the downlink data to the terminal device via the target access network device in the at least one candidate access network device comprises:
within a time window, sending the downlink data to the at least one candidate access network device, and sending the downlink data to the terminal device via the target access network device in the at least one candidate access network device, wherein the time window is a time window within which the terminal device is handed over from the source access network device to the target access network device based on the handover condition.

6. The method according to any one of claims 1 to 3, further comprising:
receiving fourth information, wherein the fourth information indicates that resource preparation for the conditional handover of the terminal device is completed; and
sending fifth information to the terminal device, wherein the fifth information indicates that a handover to an access network device is allowed.

7. The method according to any one of claims 1 to 6, further comprising:
determining the at least one candidate access network device based on an ephemeris.

8. A handover method, comprising:
receiving second information from a source access network device, wherein the second information indicates a handover condition and at least one candidate access network device, and a control plane network element that serves the source access network device is different from a control plane network element that serves the at least one candidate access network device; and
after it is determined that the handover condition is satisfied, switching from accessing the source access network device to accessing a target access network device, wherein the target access network device belongs to the at least one candidate access network device.

9. The method according to claim 8, further comprising:
receiving third information from the source access network device, wherein the third information indicates a time window; and
the switching from accessing the source access network device to accessing the target access network device comprises:
within the time window, switching from accessing the source access network device to accessing the target access network device.

10. The method according to claim 8, before the switching from accessing the source access network device to accessing the target access network device, further comprising:
receiving fifth information from the source access network device, wherein the fifth information indicates that a handover to an access network device is allowed.

11. A handover method, comprising:
during a conditional handover of a terminal device, receiving, by a target access network device, downlink data from a source access network device; and
sending the downlink data to the terminal device after it is determined that the terminal device is handed over to the target access network device, wherein a target control plane network element that serves the target access network device is different from a source control plane network element that serves the source access network device.

12. A handover method, comprising:
receiving, by a target access network device, uplink data from a terminal device;
receiving, by the target access network device, indication information from a target control plane network element, wherein the indication information indicates that resource preparation for a conditional handover of the terminal device on a core network side is completed; and
sending, by the target access network device, the uplink data to the target core network device.

13. A communication apparatus, comprising a module configured to perform the method according to any one of claims 1 to 12.

14. A communication apparatus, comprising a processor, wherein the processor is coupled to a memory;
the memory is configured to store a computer program or instructions; and
the processor is configured to execute a part or all of the computer program or the instructions in the memory, and when the part or all of the computer program or the instructions are executed, configured to implement the method according to any one of claims 1 to 12.

15. A communication apparatus, comprising a processor and a memory, wherein
the memory is configured to store a computer program or instructions; and
the processor is configured to execute a part or all of the computer program or the instructions in the memory, and when the part or all of the computer program or the instructions are executed, configured to implement the method according to any one of claims 1 to 12.

16. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 12 through a logic circuit or by executing code instructions.

17. A computer-readable storage medium, wherein the storage medium stores a computer program or instructions, and when the computer program or the instructions are executed by a communication apparatus, the method according to any one of claims 1 to 12 is implemented.

18. A computer program product, wherein the computer program product comprises computer instructions, and when the computer instructions are run on a computer, the method according to any one of claims 1 to 12 is implemented.
